# EUROPEAN PATENT APPLICATION

(11) **EP 4 485 370 A2**
(43) Date of publication of application: **01.01.2025**
(21) Application number: 23775397.5
(22) Date of filing: 16.03.2023
(51) Int. Cl.: G06V 10/40, G06V 20/20, G06T 19/00, G06F 18/213

(54) **TARGET OBJECT IDENTIFICATION METHOD AND APPARATUS, ELECTRONIC DEVICE AND STORAGE MEDIUM**

(30) Priority: 25.03.2022 CN 202210306779
(71) Applicant: Lemon Inc., Grand Cayman, KY1-1205 (KY)
(72) Inventor: XIE, Min, Beijing 100086 (CN); CHEN, Yiling, Los Angeles, CA 90066 (US); LIN, Kexin, Los Angeles, CA 90066 (US); WANG, Guangwei, Beijing 100086 (CN); WANG, Quan, Los Angeles, CA 90066 (US); SONG, Xiaodong, Beijing 100086 (CN); LIAO, Jie, Los Angeles, CA 90066 (US); CHEN, Yi, Beijing 100086 (CN); ZHANG, Yongjie, Beijing 100086 (CN); WANG, Jiaxin, Beijing 100086 (CN)
(74) Representative: Dentons UK and Middle East LLP
(86) International application number: PCT/SG2023/050169
(87) International publication number: WO 2023/182932

(57) **Abstract**

Embodiments of the disclosure provide a target object identification method and apparatus, an electronic device and a storage medium. The method comprises: in response to an object identification instruction, obtaining feature point data to be used, which corresponds to an object to be identified in a display interface; determining a target object model corresponding to the object identification instruction; wherein the target object model is reconstructed based on a preset acquired object image; if the feature point data to be used is matched with feature point data of the target object model, displaying, in the display interface, identification information corresponding to the target object model in association with the object to be identified.

## Description

The present application claims priority to Chinese Patent Application No. 202210306779.4, filed with the China National Intellectual Property Administration (CNIPA) on March 25, 2022, which is incorporated herein by reference in its entirety.

### TECHNICAL FIELD

Embodiments of the present disclosure relate to the technical field of image identification, e.g., to a method and apparatus for identifying a target object, an electronic device, and a storage medium.

### BACKGROUND

With the traditional augmented reality related technology becoming better and approaching perfection day by day, the augmented reality technology can be applied on a large scale. It is inevitable to adopt the data acquisition technology for the large-scale augmented reality technology.

Data acquisition in the related art mostly involves capturing an image including a target object, but fails to achieve object identification. Consequently, a user cannot obtain corresponding object information timely, and the user's experience is poor.

### SUMMARY

The embodiments of the present disclosure provide a method and apparatus for identifying a target object, an electronic device, and a storage medium to achieve the effects of effectively identifying an object and showing a result of identification to enhance the user's experience.

In a first aspect, embodiments of the present disclosure provide a method for identifying a target object, comprising:
obtaining feature point data to be used corresponding to an object to be identified in a display interface in response to an object identification instruction;
determining a target object model corresponding to the object identification instruction, wherein the target object model is reconstructed based on an object image obtained in advance; and
displaying object identification information corresponding to the target object model in association with the object to be identified in the display interface when the feature point data to be used matches feature point data of the target object model.

In a second aspect, embodiments of the present disclosure provide an apparatus for identifying a target object, comprising:
a feature point data obtaining module configured to obtain feature point data to be used corresponding to an object to be identified in a display interface in response to an object identification instruction;
a target object model determination module configured to determine a target object model corresponding to the object identification instruction, wherein the target object model is reconstructed based on an object image obtained in advance; and
an object to be identified display module configured to display object identification information corresponding to the target object model in association with the object to be identified in the display interface when the feature point data to be used matches feature point data of the target object model.

In a third aspect, embodiments of the present disclosure provide an electronic device, comprising:
at least one processor; and
a storage unit configured to store at least one program.

The at least one program, when executed by the at least one processor, causes the at least one processor to implement the method for identifying a target object according to any embodiment in the present disclosure.

In a fourth aspect, embodiments of the present disclosure provide a storage medium comprising computer-executable instructions, wherein the computer-executable instructions are configured to, when executed by a computer processor, implement the method for identifying a target object according to any embodiment in the present disclosure.

### BRIEF DESCRIPTION OF DRAWINGS

Throughout the drawings, the same or similar reference numerals refer to the same or similar elements. It should be understood that the figures are schematic and that elements and elements are not necessarily drawn to scale.
Fig. 1 is a flowchart of a method for identifying a target object provided by Embodiment I of the present disclosure;
Fig. 2 is a schematic diagram of a display interface provided by Embodiment I of the present disclosure;
Fig. 3 is a schematic diagram of a display interface provided by Embodiment I of the present disclosure;
Fig. 4 is a schematic diagram of a display interface provided by Embodiment I of the present disclosure;
Fig. 5 is a schematic diagram of a display interface provided by Embodiment I of the present disclosure;
Fig. 6 is a schematic diagram of a display interface provided by Embodiment I of the present disclosure;
Fig. 7 is a flowchart of a method for identifying a target object provided by Embodiment II of the present disclosure;
Fig. 8 is a flowchart of a method for identifying a target object provided by Embodiment III of the present disclosure;
Fig. 9 is a flowchart of a method for identifying a target object provided by Embodiment IV of the present disclosure;
Fig. 10 is a flowchart of a method for identifying a target object provided by Embodiment V of the present disclosure;
Fig. 11 is a structural schematic diagram of an apparatus for identifying a target object provided by Embodiment VI of the present disclosure; and
Fig. 12 is a structural schematic diagram of an electronic device provided by Embodiment VII of the present disclosure.

### DETAILED DESCRIPTION

### Embodiment I

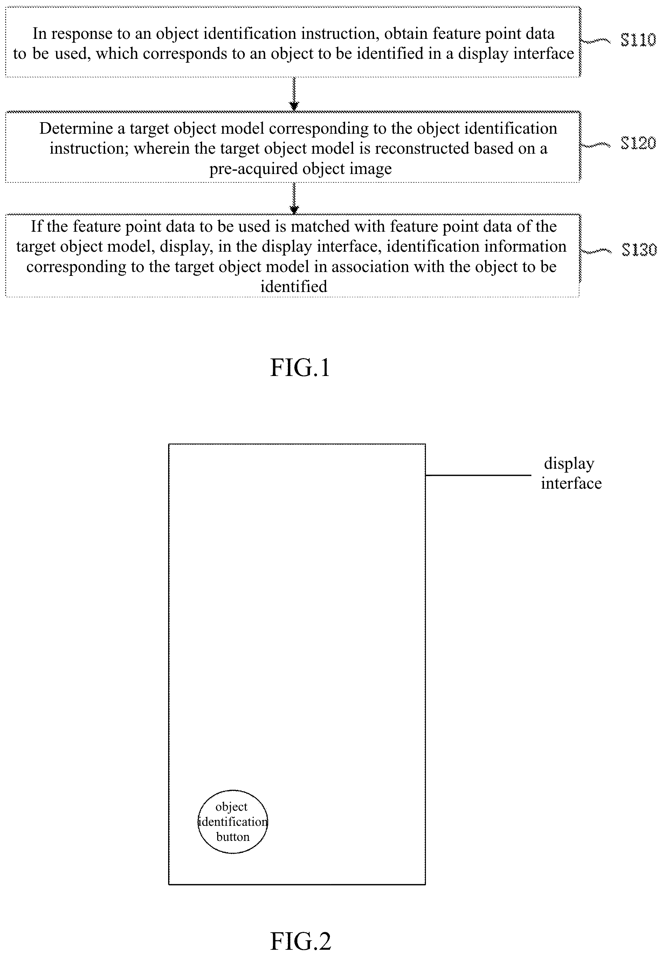

Fig. 1 is a flowchart of a method for identifying a target object provided by Embodiment I of the present disclosure. This embodiment of the present disclosure is applicable to a case of photographing and identifying an object in a real scene. The method may be performed by an apparatus for identifying a target object. The apparatus may be implemented in the form of at least one of software and hardware.

As shown in Fig. 1, the method includes the following steps.

At S110, feature point data to be used corresponding to an object to be identified in a display interface is obtained in response to an object identification instruction.

The object identification instruction may be an instruction generated by a user triggering a control on a mobile terminal. When object identification is needed, a corresponding control may be triggered to generate the object identification instruction. It needs to be noted that a corresponding application may be developed based on the embodiments of the present disclosure, or the method of the embodiment of the present disclosure may be integrated into a corresponding application to enable the application to have an object identification function. Any object in a real environment or a virtual environment may be taken as an object to be identified. An object in the field of view of a terminal device is taken as the object to be identified.

Exemplarily, when the user triggers an object identification control on a client, an image pickup apparatus of the terminal may be started to photograph the object to be identified to obtain an image including the object to be identified and determine the information of the object to be identified.

The feature point data to be used may be used to characterize feature information of the object to be identified. For an object or a scene, if a plurality of pictures are acquired at different angles, a point corresponding to a common feature is taken as a feature point, and the feature point corresponding to the object to be identified is taken as a feature point to be used.

In practical use, if the user needs to identify an object A by the terminal device, the object A may be taken as the object to be identified.

Exemplarily, the user starts a target client and triggers the object identification control on the target client to start a camera. The position information of the mobile terminal or the position information of the object to be identified may be adjusted such that the object to be identified is presented in the display interface. While the object to be identified is presented, the feature point data of the object to be identified may be obtained as the feature point data to be used.

In this technical solution, there may be a plurality of ways of generating the object identification instruction, optionally, including: detecting that the object identification control is triggered; detecting that a display interface includes an object to be identified; detecting that a capturing control is triggered; and detecting that an object view to be matched in an object identification list is triggered.

The object identification list includes a plurality of object views to be matched. The object views to be matched may be typical and representative object views pre-stored by a developer, or frequently used object views. In practical use, the object views to be matched may be obtained after the user uploads a plurality of object views captured according to an actual need so as to meet the personalized requirement of the user. In order to achieve the effect that the object views to be matched are easily viewed, the plurality of object views to be matched may be taken as a piece of data in the object identification list.

In this technical solution, the way of generating the object identification instruction may be detecting that the object identification control is triggered (a first way). The object identification control may be a key on the display interface of the client, e.g., a preset control, or any non-functional region in the display interface. As shown in Fig. 2, there is a key corresponding to the object identification control in the display interface of the client.

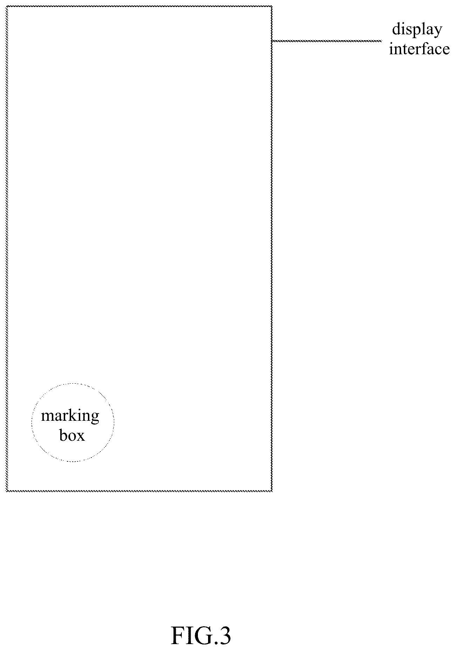

A second way is detecting that the display interface includes the object to be identified. With reference to Fig. 3, when the user needs to use the client to identify the object to be identified, the camera is started when the client is enabled, and the display interface is adjusted such that the display interface includes the object to be identified. Exemplarily, in order to facilitate determination of a display region of the object to be identified by the user, a marking box is displayed in the display interface to adjust the object to be identified to be displayed in the marking box. A shape of the making box may be any regular or irregular shape. The user adjusts a relative position of the mobile terminal and the object to be identified such that the object to be identified is displayed in the marking box, indicating that the object needs to be identified and the object identification instruction is generated.

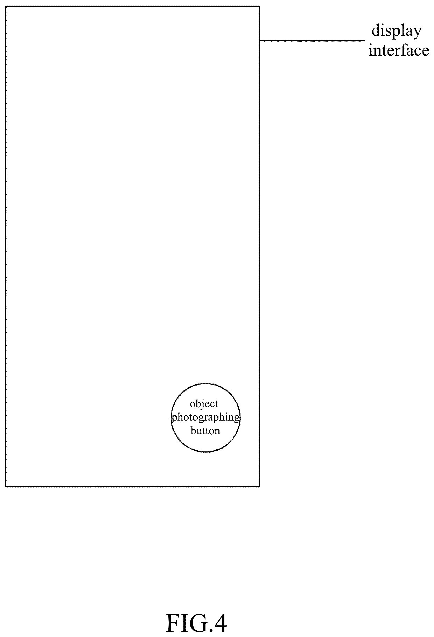

A third way may be detecting that the capturing control is triggered. As shown in Fig. 4, after the client is started, an object photographing button in the display interface is tapped to generate the object identification instruction.

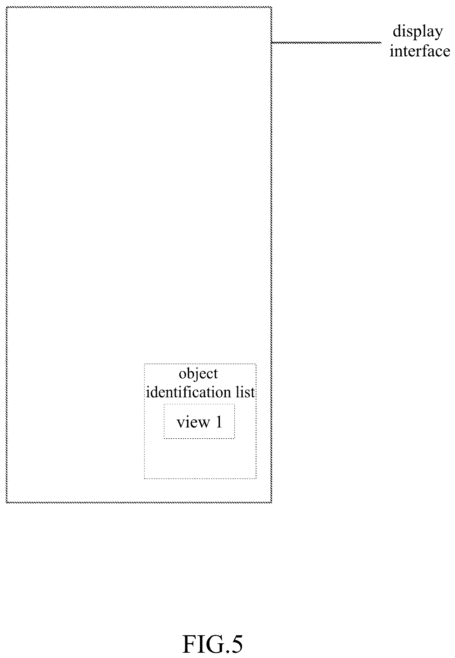

A fourth way may be detecting that the object view to be matched in the object identification list is triggered. With reference to Fig. 5, the user may trigger the object identification list in the display interface of the client. The object identification list includes many object views to be matched, and the user may trigger any one object view to be matched thereof and takes the triggering operation as a generation condition for generating the object identification instruction.

Exemplarily, the user selects the view 1 or object identification information 1 in the object identification list by a tapping operation, and the object identification instruction may be generated.

At S120, a target object model corresponding to the object identification instruction is determined.

The target object model is reconstructed based on an object image obtained in advance. The object image obtained in advance may be an image corresponding to a universal object that is captured in advance by the developer, or generated by a view corresponding to a frequently used object, or created based on a view captured and uploaded by the user in practical use. The target object model may be a three-dimensional model or an augmented reality (AR) virtual model. If the target object model is the three-dimensional model, views at a plurality of camera angles need to be obtained and are spliced to determine the model. If the target object model is the AR model, it may be determined based on an uploaded view. The object identification instruction may include an identifier of an object to be identified. Optionally, the identifier of the triggered object view to be matched is taken as the identifier of the invoked target object model. Based on this, the target object model may be determined from a plurality of object models stored in a server. That is, the target object model is used to determine whether the object in the display interface is the ultimately desired object.

Exemplarily, the server may receive the object identification instruction and parse the object identification instruction to determine a model identifier carried in the object identification such that the target object model is selected from the plurality of object models based on the model identifier.

At S130, object identification information corresponding to the target object model is displayed in association with the object to be identified in the display interface if the feature point data to be used matches feature point data of the target object model.

The target object model is also constituted by a plurality of pieces of feature point data. The object identification information is pre-edited, and is exemplary information for representing the target object model. For example, the target object model is the AR model of a vehicle. The object identification information corresponding to the AR model may be any information associated with the vehicle, which is optionally any name given by the user to the vehicle, such as "my car", or may be information such as a color and a brand of the vehicle. Displaying in association refers to correspondingly displaying the object to be identified and the object identification information on the display interface. Correspondingly displaying may be overlapping the object identification information over the object to be identified, or displaying the object identification information at a fixed position at a bottom right corner of the object to be identified in the display interface, etc.

Exemplarily, a similarity between the feature point data to be used and the feature point data of the target object model may be calculated by a similarity algorithm. If the similarity reaches a preset similarity threshold, it indicates that the object to be identified in the display interface is consistent with the target object model. At this time, the object identification information corresponding to the target object model may be overlapped over the object to be identified in a display page.

In this technical solution, the benefit of displaying the object identification information is as follows: if the object identification information is edited by the user, it usually represents a feeling or a popular name; and when the object identification information is displayed, it may be substituted into a corresponding case to achieve the effect of scene reproduction.

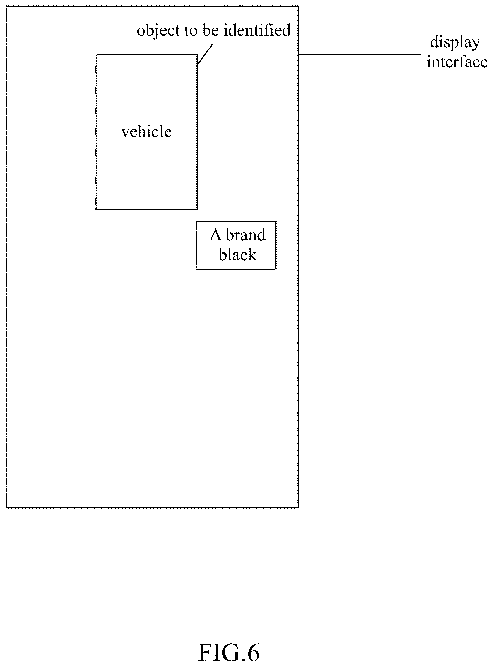

Exemplarily, as shown in Fig. 6, the object to be identified is vehicle A, the target object model is the AR model of vehicle B, and the object identification information is a brand (xx brand) or a color (black) of the vehicle B. If the feature point data matching degree of the vehicle A and the AR model of the vehicle B does not reach a preset matching threshold, the object identification information is not displayed. If the feature point data matching degree reaches the matching degree threshold, the xx brand and black may be displayed in association with the vehicle A.

According to the technical solution of this embodiment of the present disclosure, when the object identification instruction is generated, the feature point data of the object to be identified on the display interface may be obtained in real time, and the target object model corresponding to the object identification instruction is invoked. If the feature point data is consistent with the feature point data of the target object model, the object identification information is displayed in association with the object to be identified. The technical effects of effecting identifying the object and showing the object identification information in association with the object to be identified, and improving the effectiveness and relevance of object identification are achieved.

### Embodiment II

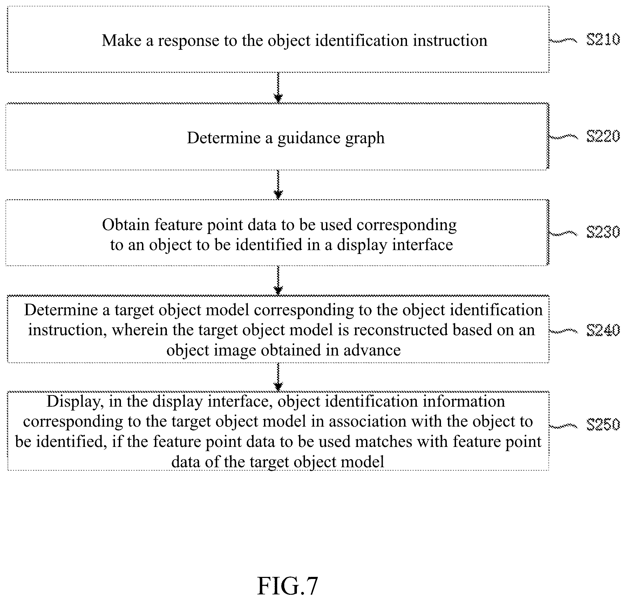

Fig. 7 is a flowchart of a method for identifying a target object provided by Embodiment II of the present disclosure. On the basis of the foregoing embodiment, in the process of identifying the object to be identified, a guidance graph corresponding to the object identification instruction may also be determined, and is displayed on the display interface semitransparently so that the user track the object to be identified based on the guidance graph displayed on the display interface. Technical terms the same as or similar to those in the above embodiment will not be described redundantly here.

At S210, a response is made to the object identification instruction.

At S220, a guidance graph is determined.

The guidance graph corresponds to the target object model. The guidance graph may be a pre-made semitransparent schematic view corresponding to the target object model, or may be a semitransparent view corresponding to the triggered object view to be matched. It may be construed as the trigged object view to be matched from the object list being taken as the target object view to be matched. The transparency of the target object view to be matched may be adjusted to obtain the guidance graph.

In the technical solution of this embodiment, there may be a plurality of ways of determining the guidance graph, such as obtaining the target object view to be matched triggered in the object identification list; generating the guidance graph corresponding to the target object view to be matched; or fetching the pre-stored guidance graph corresponding to the target object view to be matched; and displaying the guidance graph in the display interface for a user to identify the corresponding object to be identified based on the guidance graph.

Based on the above content, in order to introduce the ways of determining the guidance graph in detail, a reference may be made to the following content.

A first way of determining the guidance graph may be as follows: when the object view to be matched in the object identification list is triggered, the transparency thereof may be adjusted to obtain the guidance graph. In the object identification process, the guidance graph may be displayed on the display interface for the user to browse.

A second way of determining the guidance graph may be as follows: when an image is uploaded, a guidance graph corresponding to each uploaded view may be made so that the corresponding guidance graph can be fetched upon receiving the object identification instruction.

Exemplarily, when the object view to be matched triggered by the user in the object identification list is a cup, the client may generate a semitransparent graph consistent with the cup and display the semitransparent graph in the display interface.

At S230, feature point data to be used corresponding to an object to be identified in a display interface is obtained.

At S240, a target object model corresponding to the object identification instruction is determined, where the target object model is reconstructed based on an object image obtained in advance.

At S250, object identification information corresponding to the target object model is displayed in association with the object to be identified in the display interface if the feature point data to be used matches feature point data of the target object model.

According to the technical solution of this embodiment of the present disclosure, after responding to the object identification instruction, the target object view to be matched triggered in the object identification list may be obtained, and the corresponding guidance graph is generated based on the target object view to be matched. The guidance graph may be displayed on the display interface semitransparently such that the user is guided to photograph the object to be identified based on the semitransparent guidance graph. The object to be identified is then determined to match the target object model. The technical effect of object identification guidance is achieved.

### Embodiment III

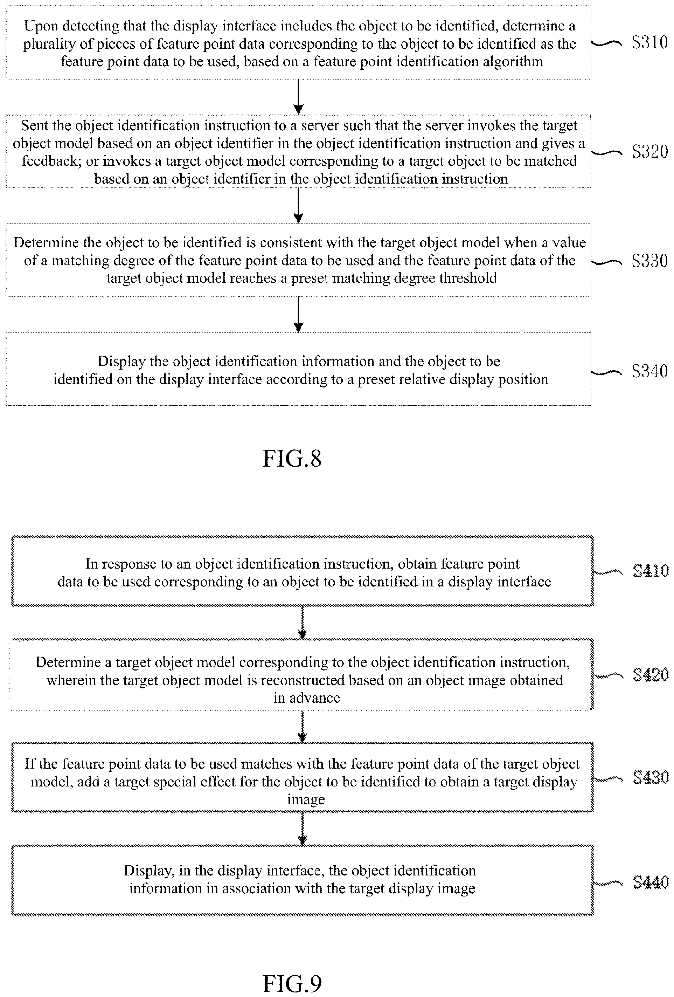

Fig. 8 is a flowchart of a method for identifying a target object provided by Embodiment III of the present disclosure. On the basis of the foregoing embodiments, obtaining the feature point data to be used may be refined, and an implementation may be as shown in the technical solution of this embodiment. Technical terms the same as or similar to those in the above embodiment will not be repeatedly described here.

At S310, upon detecting that the display interface includes the object to be identified, a plurality of pieces of feature point data corresponding to the object to be identified are determined as the feature point data to be used, based on a feature point identification algorithm.

Exemplarily, usually, an object includes a plurality of feature points. The client may determine the feature point data of the object to be identified based on the feature point identification algorithm upon detecting that the display interface includes the object to be identified.

At S320, the object identification instruction is sent to a server such that the server invokes the target object model based on an object identifier in the object identification instruction and gives a feedback; or a target object model corresponding to a target object to be matched is invoked based on an object identifier in the object identification instruction.

The established target object model may be stored on the server, or the target object model may be stored on the client.

Exemplarily, if the target object model is stored on the server, the object identification instruction may be sent to the server for example. The server parses the object identification instruction to obtain the object identifier corresponding to the instruction. The target object model corresponding to the object identifier is invoked from a database of the server based on the object identifier and fed back to the client. If the object model is stored on the client, the object identification instruction may be identified based on the client, and the corresponding target object model may be invoked based on the object identifier in the object identification instruction.

At S330, it is determined that the object to be identified is consistent with the target object model if a value of a matching degree of the feature point data to be used and the feature point data of the target object model reaches a preset matching degree threshold.

Exemplarily, when the display interface includes the object to be identified, a similarity between the feature point data to be used and the feature point data of the target object model may be calculated. When a value of the similarity reaches a preset similarity threshold, and optionally reaches 95%, it indicates that the object to be identified in the display interface is consistent with the target object model.

It also needs to be noted that the object to be identified in the display interface may be variable, and the operation of feature point matching may be performed repeatedly as long as a change is detected.

At S340, the object identification information and the object to be identified are displayed on the display interface according to a preset relative display position.

The preset display position may be as follows: the object identification information is displayed at a top end of the object to be identified, on the left or the right of the object to be identified, or in a preset object identification information display box.

According to the technical solution of this embodiment of the present disclosure, the target object model corresponding to the object identification instruction may be invoked from the server or the client, and whether the object to be identified is consistent with the target object model may be determined based on the matching processing of the feature point data of the target object model and the feature point data of the object to be identified. The technical effect of effectively identifying the object is achieved.

### Embodiment IV

Fig. 9 is a flowchart of a method for identifying a target object provided by Embodiment IV of the present disclosure. On the basis of the foregoing embodiments, in this embodiment, a corresponding effect may be added when the object identification information may be displayed in association with the object to be identified. Thus, the effect of enhancing the use experience of the user is achieved. An implementation of displaying the object identification information in association with the object to be identified may be as shown in the technical solution of this embodiment. Technical terms the same as or similar to those in the above embodiment will not be repeatedly described here.

At S410, feature point data to be used corresponding to an object to be identified in a display interface is obtained in response to an object identification instruction.

At S420, a target object model corresponding to the object identification instruction is determined, where the target object model is reconstructed based on an object image obtained in advance.

At S430, if the feature point data to be used matches the feature point data of the target object model, a target effect is added for the object to be identified to obtain a target display image.

The target effect is used to enrich the display content of the display interface. The target effect may be an effect edge frame added for the object to be identified, such as a photo frame, clipart, and wordart. The benefit of adding the target effect is that the texture of a display picture can be improved.

Exemplarily, if the object to be identified is a "cola bottle" which is consistent with the target object model (a cola bottle model), the target effect "a cool summer" may be added for the object to be identified "cola bottle" such that the display interface includes the object to be identified and the target effect "a cool summer".

In this technical solution, adding the target effect for the object to be identified to obtain the target display image may include: fetching a target effect consistent with an object type of the object to be identified; or obtaining a pre-triggered target effect; and displaying the target effect and the object to be identified in an overlapping manner to obtain the target display image.

Objects may be divided into a plurality of object classes in a three-level classification way. Different target effects are set for different object classes. After matching is successful, the matched target effect may be fetched according to the object class, i.e., the object type of the object to be identified, and the target effect and the object to be identified are displayed in an overlapping manner. Alternatively, when the user triggers an effect adding control, an effect panel pops up. The effect panel includes a plurality of effects to be selected, and the target effect is determined according to a triggering operation for the effects to be selected.

After the target effect is determined, the target effect, the object to be identified and the object identification information may be displayed in an overlapping manner to obtain the target display image.

Exemplarily, the effect panel may include a red heart effect, a rose effect, a start effect, a cartoon pattern, a historical figure effect, etc. If the user triggers the red heart effect, after the object to be identified successfully matches the target object model, the red heart effect may be overlapped on the object to be identified. The way and position of overlapping are not defined in this technical solution.

At S440, the object identification information is displayed in association with the target display image in the display interface.

Exemplarily, after the target display image is obtained, the object identification information is placed above the target display image and displayed together in the display interface, or the object identification information is displayed in close proximity to the target display image in the display interface.

According to the technical solution of this embodiment of the present disclosure, upon determining that the object to be identified is consistent with the target object model, the corresponding target effect may be added for the object to be identified. Thus, the effect of improving the content richness of the display interface is achieved.

### Embodiment V

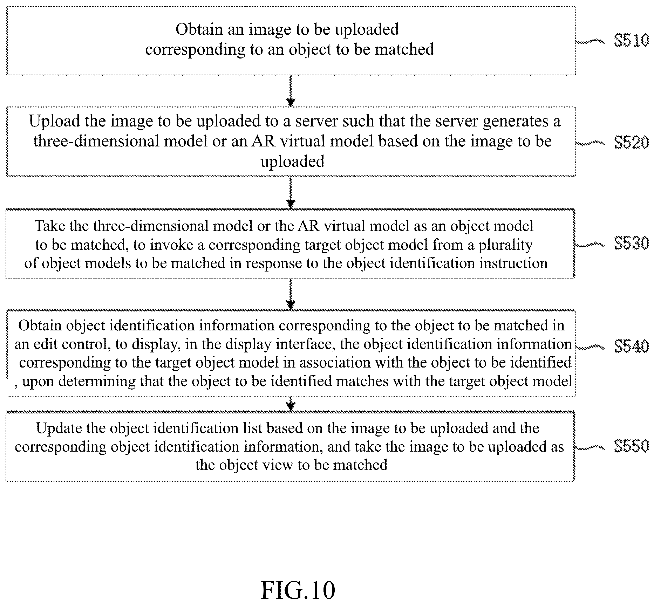

Fig. 10 is a flowchart of a method for identifying a target object provided by an embodiment of the present disclosure. On the basis of the foregoing embodiments, the corresponding object view to be matched may be uploaded first, and the object model corresponding to the object view to be matched may be generated for fetching in object identification. An implementation may be as shown as in the technical solution of this embodiment. Technical terms the same as or similar to those in the above embodiment will not be repeatedly described here.

At S510, an image to be uploaded corresponding to an object to be matched is obtained.

Object to be matched may be different representative objects photographed by the developer in different scenes. The image to be uploaded refers to a captured image of the object to be matched.

Exemplarily, the user or the developer may select different objects in different scenes as the object to be matched in advance. These objects may be objects having typical features. The object to be matched are photographed to obtain captured images as the images to be uploaded.

Exemplarily, objects such as a cup, a desk, a figurine are photographed to obtain the images to be uploaded.

At S520, the image to be uploaded is uploaded to a server such that the server generates a three-dimensional model or an AR virtual model based on the image to be uploaded.

Exemplarily, after the mobile terminal captures the image of the object to be matched, the image may be sent to the server in a network communication way. The server processes the image to be uploaded by a special image processing technique, such as cropping, segmenting, encoding, and enhancing, thereby generating the three-dimensional model or the AR virtual model of the image to be uploaded. If the three-dimensional model needs to be generated, the images of the object to be matched at different angles are uploaded to the server, and the server generates the three-dimensional model based on the images of the object to be identified at different angles. If the AR virtual model needs to be generated, the AR virtual model can be reconstructed by uploading only one image of the object to be matched.

At S530, the three-dimensional model or the AR virtual model is taken as an object model to be matched to invoke a corresponding target object model from a plurality of object models to be matched in response to the object identification instruction.

Exemplarily, the generated three-dimensional model or the AR virtual model corresponding to each object to be matched is taken as the object model to be matched and stored on the server or the client. An object model is selected from the object model to be matched as the target object model according to the object identification instruction.

At S540, object identification information corresponding to the object to be matched in an edit control is obtained, to display, in the display interface, the object identification information corresponding to the target object model in association with the object to be identified, upon determining that the object to be identified matches the target object model.

The user may edit corresponding text information in the edit control. After a view of the object to be matched is captured, a text corresponding to the view is edited as the object identification information. The object identification information may be the information of the object itself, such as name information. The object identification information may also be a sentence edited according to a capturing situation, and the sentence is literary or is scene-based to a certain extent. Exemplarily, after an image of the object to be matched is captured, in order to rapidly confirm what information of the object is in next identification, when the image is uploaded, the edit control may be triggered to input text information related to the scene or the feature of the object to be matched. For example, the text information may be the name of the object, or the scene information of the object, or the thinking and feeling of the user. The text information is also taken as the object identification information, and the image to be uploaded and the object identification information are uploaded to the server simultaneously. Thus, after the object identification is successful, the object identification information may be displayed to achieve the effect of scene reproduction.

At S550, the object identification list is updated based on the image to be uploaded and the corresponding object identification information, and the image to be uploaded is taken as the object view to be matched.

Exemplarily, when the user or the developer sends an image to the server, the object identification list may be updated based on the image to be uploaded. The image updated to the object identification list is taken as the object view to be matched. Meanwhile, the object identification information is stored correspondingly to the object view to be matched.

According to the technical solution of this embodiment of the present disclosure, the captured object image may be uploaded to the server such that the server reconstructs the object model corresponding to the object image; meanwhile, before the object image is uploaded to the server, the object identification information of the object image may be edited. The object identification information and the object view to be matched are correspondingly displayed in the object identification list, and the corresponding object model and the guidance graph may be invoked in response to the object identification instruction. The technical effect of improving the effectiveness and convenience of object identification is achieved.

### Embodiment VI

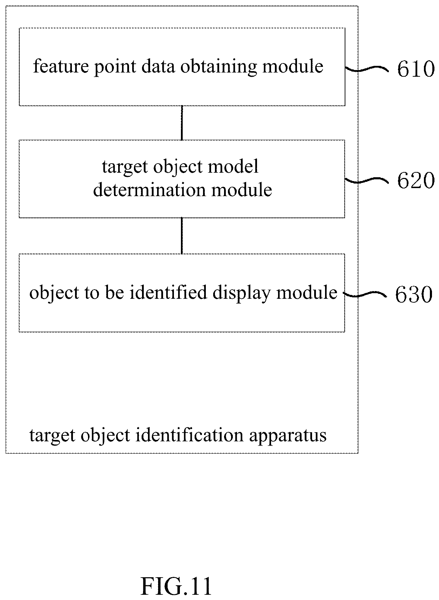

Fig. 11 is a structural block diagram of a target object identification apparatus provided by Embodiment VI of the present disclosure. The apparatus may perform the method for identifying a target object provided in any embodiment of the present disclosure and has corresponding functional modules for performing the method and corresponding effects. The apparatus includes a feature point data obtaining module 610, a target object model determination module 620, and an object to be identified display module 630.

The feature point data obtaining module 610 is configured to obtain feature point data to be used corresponding to an object to be identified in a display interface in response to an object identification instruction; the target object model determination module 620 is configured to determine a target object model corresponding to the object identification instruction, where the target object model is reconstructed based on an object image obtained in advance; and the object to be identified display module 630 is configured to display object identification information corresponding to the target object model in association with the object to be identified in the display interface if the feature point data to be used matches feature point data of the target object model.

On the basis of the above technical solution, a way of generating the object identification instruction includes at least one of:

detecting that an object identification control is triggered; detecting that the display interface includes the object to be identified; detecting that a capturing control is triggered; and detecting that an object view to be matched in an object identification list is triggered, where the object identification list is generated based on a plurality of object views to be matched that are captured in advance.

On the basis of the above technical solution, the feature point data obtaining module 610 includes:
a view obtaining sub-module configured to obtain a target object view to be matched triggered in the object identification list;
a guidance graph generation sub-module configured to generate a guidance graph corresponding to the target object view to be matched; or
a guidance graph fetching sub-module configured to fetch a pre-stored guidance graph corresponding to the target object view to be matched; and
a guidance graph display sub-module configured to display the guidance graph in the display interface for a user to identify the corresponding object to be identified based on the guidance graph.

On the basis of the above technical solution, the feature point data obtaining module 610 includes:
a feature point data identification sub-module configured to, upon detecting that the display interface includes the object to be identified, determine, based on a feature point identification algorithm, a plurality of pieces of feature point data corresponding to the object to be identified as the feature point data to be used.

On the basis of the above technical solution, the target object model determination module 620 includes:
a target object model feedback sub-module configured to send the object identification instruction to a server such that the server invokes the target object model based on an object identifier in the object identification instruction and gives a feedback; or
a target object model invoking sub-module configured to invoke a target object model corresponding to a target object to be matched based on an object identifier in the object identification instruction.

On the basis of the above technical solution, the object to be identified display module 630 includes:
a matching degree calculation sub-module configured to determine that the object to be identified is consistent with the target object model if a value of a matching degree of the feature point data to be used and the feature point data of the target object model reaches a preset matching degree threshold; and
a display sub-module configured to display the object identification information and the object to be identified on the display interface according to a preset relative display position.

On the basis of the above technical solution, the object to be identified display module 630 includes:
a target effect adding sub-module configured to add a target effect for the object to be identified to obtain a target display image; and
an associated display sub-module configured to display the object identification information in association with the target display image in the display interface.

On the basis of the above technical solution, the target effect adding sub-module includes:
a target effect fetching unit configured to fetch a target effect consistent with an object type of the object to be identified; or
a target effect triggering unit configured to obtain a pre-triggered target effect; and
an overlapping display unit configured to display the target effect and the object to be identified in an overlapping manner to obtain the target display image.

On the basis of the above technical solution, the apparatus further includes:
an image to be uploaded obtaining module configured to obtain an image to be uploaded corresponding to an object to be matched;
an object model generation module configured to upload the image to be uploaded to a server such that the server generates a three-dimensional model or an AR virtual model based on the image to be uploaded; and
an object model invoking module configured to take the three-dimensional model or the AR virtual model as an object model to be matched to invoke a corresponding target object model from a plurality of object models to be matched in response to the object identification instruction.

On the basis of the above technical solution, the apparatus further includes:
an object identification information editing module configured to obtain object identification information corresponding to the object to be matched in an edit control to display the object identification information corresponding to the target object model in association with the object to be identified in the display interface upon determining that the object to be identified matches the target object model.

On the basis of the above technical solution, the apparatus further includes: an object identification list updating module configured to update the object identification list based on the image to be uploaded and the corresponding object identification information, and take the image to be uploaded as the object view to be matched.

According to the technical solution of this embodiment of the present disclosure, when the object identification instruction is generated, the feature point data of the object to be identified on the display interface may be obtained in real time, and the target object model corresponding to the object identification instruction is invoked. If the feature point data is consistent with the feature point data of the target object model, the object identification information is displayed in association with the object to be identified. It is realized that the object is effectively identified and the object identification information is shown in association with the object to be identified, and the technical effect of improving the effectiveness and relevance of object identification is achieved.

The target object identification apparatus provided in the embodiment of the present disclosure may perform the method for identifying a target object provided in any embodiment of the present disclosure and has corresponding functional modules for performing the method and corresponding effects.

### Embodiment VII

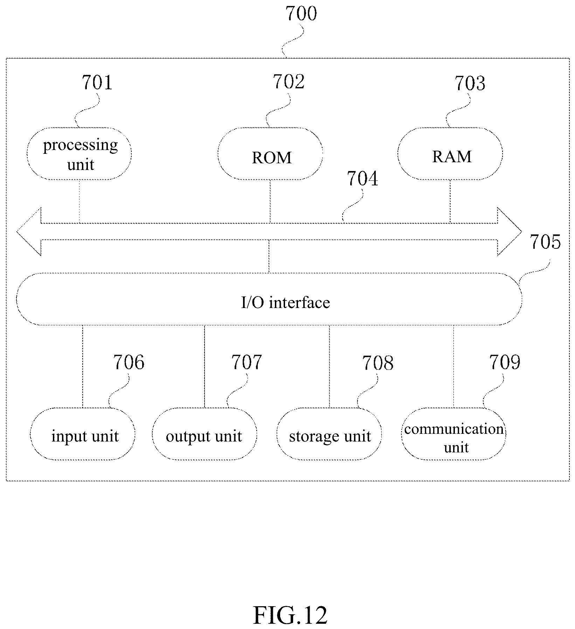

Fig. 12 is a structural schematic diagram of an electronic device provided by Embodiment VII of the present disclosure. With reference to Fig. 12, there is shown a structural schematic diagram of an electronic device (e.g., a terminal device or a server in Fig. 12) 700 adapted to implement the embodiments of the present disclosure. The terminal device in this embodiment of the present disclosure may include, but is not limited to, mobile terminals such as a mobile phone, a notebook computer, a digital broadcasting receiver, a personal digital assistant (PDA), a portable Android device (PAD), a portable media player (PMP), and a vehicle-mounted terminal (e.g., a vehicle-mounted navigation terminal), and fixed terminals such as a digital television (TV) and a desktop computer. The electronic device shown in Fig. 12 is merely an example, and should not impose any limitation to the functions and the range of use of the embodiments of the present disclosure.

As shown in Fig. 12, the electronic device 700 may include a processing unit (e.g., a central processing unit, or a graphics processing unit) 701, which can perform various suitable actions and processing according to a program stored on a read-only memory (ROM) 702 or a program loaded from a storage unit 708 into a random-access memory (RAM) 703. The RAM 703 further stores various programs and data required for operations of the electronic device 700. The processing unit 701, the ROM 702, and the RAM 703 are interconnected by means of a bus 704. An input/output (I/O) interface 705 is also connected to the bus 704.

Usually, the following apparatuses may be connected to the I/O interface 705: an input unit 706 including, for example, a touch screen, a touch pad, a keyboard, a mouse, a camera, a microphone, an accelerometer, and a gyroscope; an output unit 707 including, for example, a liquid crystal display (LCD), a loudspeaker, and a vibrator; a storage unit 708 including, for example, a magnetic tape and a hard disk; and a communication unit 709. The communication unit 709 may allow the electronic device 700 to be in wireless or wired communication with other devices to exchange data. While Fig. 12 illustrates the electronic device 700 having various apparatuses, it is to be understood that all the illustrated apparatuses are not necessarily implemented or included. More or less apparatuses may be implemented or included alternatively.

Particularly, according to the embodiments of the present disclosure, the process described above with reference to the flowchart may be implemented as a computer software program. For example, an embodiment of the present disclosure includes computer-executable Instructions, which include a computer program carried by a non-transitory computer-readable medium. The computer program includes a program code for performing the method shown in the flowchart. In such embodiments, the computer program may be downloaded online through the communication unit 709 and installed, or installed from the storage unit 708, or installed from the ROM 702. When the computer program is executed by the processing unit 701, the functions defined in the method of the embodiments of the present disclosure are executed.

Names of messages or information exchanged between a plurality of apparatuses in embodiments of the present disclosure are only used for the purpose of description and not meant to limit the scope of these messages or information.

The electronic device provided in this embodiment of the present disclosure and the method for identifying a target object provided in the foregoing embodiments belong to the same inventive concept. For technical details not described in detail in the present embodiment, a reference may be made to the foregoing embodiments, and the present embodiment and the foregoing embodiments have the effects.

### Embodiment VIII

An embodiment of the present disclosure provides a storage medium for computer-executable instructions. The storage medium stores computer-executable instructions which, when executed by a processor, cause implementing the method for identifying a target object provided by the foregoing embodiment.

It needs to be noted that the storage medium for computer-executable instructions described above in the present disclosure may be a computer-readable signal medium or a computer-readable storage medium or any combination of both. The computer readable storage medium, may be, for example, but not limited to, electrical, magnetic, optical, electromagnetic, infrared, or semiconductor systems, apparatuses, or devices, or any combination thereof. Examples of the computer-readable storage medium may include, but be not limited to, an electrical connection with at least one wire, a portable computer disk, a hard disk, a random-access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In the present disclosure, the storage medium for computer-executable instructions may be any tangible medium that contains or stores a program, and the program may be used by or used in combination with an instruction execution system, apparatus, or device. In the present disclosure, the storage medium for computer-executable instructions may include a data signal propagated in a baseband or as a part of a carrier, and computer readable program code is carried therein. The propagated data signal may be in various forms, including but not limited to an electromagnetic signal, an optical signal, or any suitable combination thereof. The storage medium for computer-executable instructions may also be any computer readable medium except the computer readable medium. The storage medium for computer-executable instructions may send, propagate or transmit a program used by or used in combination with an instruction execution system, apparatus or device. The program code included on the storage medium for computer-executable instructions may be transmitted by using any suitable medium, including but not limited to an electric wire, a fiber-optic cable, radio frequency (RF) and the like, or any appropriate combination thereof.

In one implementation, a client and a server may communicate by means of any network protocol currently known or to be developed in future such as HyperText Transfer Protocol (HTTP), and may achieve communication and interconnection with digital data (e.g., a communication network) in any form or of any medium. Examples of the communication network include a local area network (LAN), a wide area network (WAN), an internet work (e.g., the Internet), a peer-to-peer network (e.g., ad hoc peer-to-peer network), and any network currently known or to be developed in future.

The above-mentioned storage medium for computer-executable instructions may be included in the electronic device described above, or may exist alone without being assembled with the electronic device.

The above-mentioned storage medium for computer-executable instructions may carry at least one program which, when executed by the electronic device, causes the electronic device to:
obtain feature point data to be used corresponding to an object to be identified in a display interface in response to an object identification instruction;
determine a target object model corresponding to the object identification instruction, where the target object model is reconstructed based on an object image obtained in advance; and
display object identification information corresponding to the target object model in association with the object to be identified in the display interface if the feature point data to be used matches feature point data of the target object model.

A computer program code for performing the operations in the present disclosure may be written in at least one programming language or a combination thereof. The programming languages include but are not limited to object-oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server. In a circumstance in which a remote computer is involved, the remote computer may be connected to a user computer via any type of network, including a local area network (LAN) or a wide area network (WAN), or may be connected to an external computer (for example, connected via the Internet by using an Internet service provider).

The flowcharts and block diagrams in the accompanying drawings illustrate system architectures, functions and operations that may be implemented by the system, method and computer-executable instructions according to the embodiments of the present disclosure. In this regard, each block in the flowcharts or block diagrams may represent a module, a program segment or a part of code, and the module, the program segment or the part of code includes at least one executable instruction for implementing specified logic functions. It should also be noted that in some alternative implementations, the functions marked in the blocks may alternatively occur in a different order from that marked in the drawings. For example, two successively shown blocks actually may be executed in parallel substantially, or may be executed in reverse order sometimes, depending on the functions involved. It should also be noted that, each block in the block diagram or flowchart and the combination of the blocks in the block diagram or the flowchart may be implemented by a dedicated hardware-based system that performs a defined function or operation, or may be implemented by a combination of dedicated hardware and computer instructions.

Related units described in the embodiments of the present disclosure may be implemented by software, or may be implemented by hardware. The name of a unit does not constitute a limitation on the unit itself in a particular case. For example, a first obtaining unit may also be described as "a unit for obtaining at least two Internet protocol addresses".

The functions described above in this specification may be at least partially performed by at least one hardware logic unit. For example, exemplary types of hardware logic components that can be used without limitations include a field programmable gate array (FPGA), an application specific integrated circuit (ASIC), an application specific standard product (ASSP), a system on chip (SOC), a complex programmable logic device (CPLD), and the like.

In the context of the present disclosure, the machine-readable medium may be a tangible medium that may contain or store a program used by or used in combination with an instruction execution system, apparatus or device. The machine-readable medium may be a machine-readable signal medium or a machine-readable storage medium. The machine-readable medium may include but be not limited to an electronic, magnetic, optical, electromagnetic, infrared, or semiconductor system, apparatus or device, or any appropriate combination thereof. Examples of the machine-readable storage medium include: an electrical connection based on at least one wire, a portable computer disk, a hard disk, a RAM, a ROM, an erasable programmable ROM (an EPROM), a flash memory, an optical fiber, a portable compact disc read-only memory (CD-ROM), an optical storage device, a magnetic storage device, or any suitable combination thereof.

According to an embodiment of the present disclosure, [Example 1] provides a method for identifying a target object, including:
obtaining feature point data to be used corresponding to an object to be identified in a display interface in response to an object identification instruction;
determining a target object model corresponding to the object identification instruction, where the target object model is reconstructed based on an object image obtained in advance; and
displaying object identification information corresponding to the target object model in association with the object to be identified in the display interface if the feature point data to be used matches feature point data of the target object model.

According to an embodiment of the present disclosure, [Example 2] provides a method for identifying a target object, further including:
a way of generating the object identification instruction including at least one of:
detecting that an object identification control is triggered;
detecting that the display interface includes the object to be identified;
detecting that a capturing control is triggered; and
detecting that an object view to be matched in an object identification list is triggered, where the object identification list is generated based on a plurality of object views to be matched captured in advance.

According to an embodiment of the present disclosure, [Example 3] provides a method for identifying a target object, further including:
optionally, after responding to the object identification instruction and before the obtaining feature point data to be used corresponding to an object to be identified in a display interface,
obtaining a target object view to be matched triggered in the object identification list;
generating a guidance graph corresponding to the target object view to be matched; or
fetching a pre-stored guidance graph corresponding to the target object view to be matched; and
displaying the guidance graph in the display interface for a user to identify the corresponding object to be identified based on the guidance graph,
where the guidance graph is a semitransparent view corresponding to the target object view to be matched.

According to an embodiment of the present disclosure, [Example 4] provides a method for identifying a target object, further including:
optionally, the obtaining feature point data to be used corresponding to an object to be identified in a display interface including:
upon detecting that the display interface includes the object to be identified, determining, based on a feature point identification algorithm, a plurality of pieces of feature point data corresponding to the object to be identified as the feature point data to be used.

According to an embodiment of the present disclosure, [Example 5] provides a method for identifying a target object, further including:
optionally, the determining a target object model corresponding to the object identification instruction including:
sending the object identification instruction to a server such that the server invokes the target object model based on an object identifier in the object identification instruction and gives a feedback; or
invoking a target object model corresponding to a target object to be matched based on an object identifier in the object identification instruction.

According to an embodiment of the present disclosure, [Example 6] provides a method for identifying a target object, further including:
optionally, the displaying object identification information corresponding to the target object model in association with the object to be identified in the display interface if the feature point data to be used matches feature point data of the target object model including:
determining that the object to be identified is consistent with the target object model if a value of a matching degree of the feature point data to be used and the feature point data of the target object model reaches a preset matching degree threshold; and
displaying the object identification information and the object to be identified on the display interface according to a preset relative display position.

According to an embodiment of the present disclosure, [Example 7] provides a method for identifying a target object, further including:
optionally, the displaying object identification information corresponding to the target object model in association with the object to be identified in the display interface including:
adding a target effect for the object to be identified to obtain a target display image; and
displaying the object identification information in association with the target display image in the display interface.

According to an embodiment of the present disclosure, [Example 8] provides a method for identifying a target object, further including:
optionally, the adding a target effect for the object to be identified to obtain a target display image including:
fetching a target effect consistent with an object type of the object to be identified;
obtaining a pre-triggered target effect; and
displaying the target effect and the object to be identified in an overlapping manner to obtain the target display image.

According to an embodiment of the present disclosure, [Example 9] provides a method for identifying a target object, further including:
optionally, obtaining an image to be uploaded corresponding to an object to be matched;
uploading the image to be uploaded to a server such that the server generates a three-dimensional model or an AR virtual model based on the image to be uploaded; and
taking the three-dimensional model or the AR virtual model as an object model to be matched to invoke a corresponding target object model from a plurality of object models to be matched in response to the object identification instruction.

According to an embodiment of the present disclosure, [Example 10] provides a method for identifying a target object, further including:
optionally, after the obtaining an image to be uploaded corresponding to an object to be matched,
obtaining object identification information corresponding to the object to be matched in an edit control to display the object identification information corresponding to the target object model in association with the object to be identified in the display interface upon determining that the object to be identified matches the target object model.

According to an embodiment of the present disclosure, [Example 11] provides a method for identifying a target object, further including:
optionally, updating the object identification list based on the image to be uploaded and the corresponding object identification information, and taking the image to be uploaded as the object view to be matched.

According to an embodiment of the present disclosure, [Example 12] provides an apparatus for identifying a target object, further including:
a feature point data obtaining module configured to obtain feature point data to be used corresponding to an object to be identified in a display interface in response to an object identification instruction;
a target object model determination module configured to determine a target object model corresponding to the object identification instruction, where the target object model is reconstructed based on an object image obtained in advance; and
an object to be identified display module configured to display object identification information corresponding to the target object model in association with the object to be identified in the display interface if the feature point data to be used matches feature point data of the target object model.

## Claims

1. A method for identifying a target object, comprising:
obtaining feature point data to be used corresponding to an object to be identified in a display interface in response to an object identification instruction;
determining a target object model corresponding to the object identification instruction, wherein the target object model is reconstructed based on an object image obtained in advance; and
displaying object identification information corresponding to the target object model in association with the object to be identified in the display interface in response to determining that the feature point data to be used matches feature point data of the target object model.

2. The method according to claim 1, wherein a way of generating the object identification instruction includes at least one of:
detecting that an object identification control is triggered;
detecting that the display interface includes the object to be identified;
detecting that a capturing control is triggered; and
detecting that an object view to be matched in an object identification list is triggered, wherein the object identification list is generated based on a plurality of object views to be matched that are captured in advance.

3. The method according to claim 1, after responding to the object identification instruction and before the obtaining feature point data to be used corresponding to an object to be identified in a display interface, further comprising:
obtaining a target object view to be matched triggered in the object identification list;
generating a guidance graph corresponding to the target object view to be matched, or fetching a pre-stored guidance graph corresponding to the target object view to be matched; and
displaying the guidance graph in the display interface for a user to identify the corresponding object to be identified based on the guidance graph,
wherein the guidance graph is a semitransparent view corresponding to the target object view to be matched.

4. The method according to claim 1, wherein the obtaining feature point data to be used corresponding to an object to be identified in a display interface comprises:
upon detecting that the display interface comprises the object to be identified, determining, based on a feature point identification algorithm, a plurality of pieces of feature point data corresponding to the object to be identified as the feature point data to be used.

5. The method according to claim 1, wherein the determining a target object model corresponding to the object identification instruction comprises:
sending the object identification instruction to a server such that the server invokes the target object model based on an object identifier in the object identification instruction and gives a feedback; or
invoking a target object model corresponding to a target object to be matched based on an object identifier in the object identification instruction.

6. The method according to claim 1, wherein the displaying object identification information corresponding to the target object model in association with the object to be identified in the display interface in response to determining that the feature point data to be used matches feature point data of the target object model comprises:
determining that the object to be identified is consistent with the target object model in response to a value of a matching degree of the feature point data to be used and the feature point data of the target object model reaching a preset matching degree threshold; and
displaying the object identification information and the object to be identified on the display interface according to a preset relative display position.

7. The method according to claim 1, wherein the displaying object identification information corresponding to the target object model in association with the object to be identified in the display interface comprises:
adding a target effect for the object to be identified to obtain a target display image; and
displaying the object identification information in association with the target display image in the display interface.

8. The method according to claim 7, wherein the adding a target effect for the object to be identified to obtain a target display image comprises:
fetching a target effect consistent with an object type of the object to be identified or obtaining a pre-triggered target effect; and
displaying the target effect and the object to be identified in an overlapping manner to obtain the target display image.

9. The method according to claim 1, further comprising:
obtaining an image to be uploaded corresponding to an object to be matched;
uploading the image to be uploaded to a server such that the server generates a three-dimensional model or an augmented reality (AR) virtual model based on the image to be uploaded; and
taking the three-dimensional model or the AR virtual model as an object model to be matched to invoke a corresponding target object model from a plurality of object models to be matched in response to the object identification instruction.

10. The method according to claim 9, after the obtaining an image to be uploaded corresponding to an object to be matched, further comprising:
obtaining object identification information corresponding to the object to be matched in an edit control to display the object identification information corresponding to the target object model in association with the object to be identified in the display interface upon determining that the object to be identified matches the target object model.

11. The method according to claim 10, further comprising:
updating the object identification list based on the image to be uploaded and the corresponding object identification information, and taking the image to be uploaded as the object view to be matched.

12. An apparatus for identifying a target object, comprising:
a feature point data obtaining module (610) configured to obtain feature point data to be used corresponding to an object to be identified in a display interface in response to an object identification instruction;
a target object model determination module (620) configured to determine a target object model corresponding to the object identification instruction, wherein the target object model is reconstructed based on an object image obtained in advance; and
an object to be identified display module (630) configured to display object identification information corresponding to the target object model in association with the object to be identified in the display interface when the feature point data to be used matches feature point data of the target object model.

13. An electronic device, comprising:
at least one processor; and
a storage unit configured to store at least one program,
wherein the at least one program, when executed by the at least one processor, causes the at least one processor to implement the method for identifying a target object according to any one of claims 1 to 11.

14. A storage medium comprising computer-executable instructions, wherein the computer-executable instructions are configured to, when executed by a computer processor, implement the method for identifying a target object according to any one of claims 1 to 11.
